(19) 

**Europäisches Patentamt**
**European Patent Office**
**Office européen des brevets**

(11) **EP 3 700 044 B1**

(12) **EUROPEAN PATENT SPECIFICATION**

(45) Date of publication and mention
of the grant of the patent:
**29.04.2026 Bulletin 2026/18**

(21) Application number: **18868725.5**

(22) Date of filing: **12.06.2018**

(51) International Patent Classification (IPC):
**B60L 53/80** *(2019.01)* **H01M 10/44** *(2006.01)*
**H02J 7/00** *(2026.01)* **H02J 7/50** *(2026.01)*
**H02J 7/92** *(2026.01)*

(52) Cooperative Patent Classification (CPC):
**H02J 7/50; B60L 53/80; H01M 10/44; H02J 7/00;**
**H02J 7/92;** Y02E 60/10; Y02T 10/70; Y02T 10/7072;
Y02T 90/12; Y02T 90/16

(86) International application number:
**PCT/CN2018/090835**

(87) International publication number:
**WO 2019/076069 (25.04.2019 Gazette 2019/17)**

(54) **METHOD AND APPARATUS FOR DETERMINING BATTERY CHARGING STRATEGY OF BATTERY SWAP STATION**

VERFAHREN UND VORRICHTUNG ZUR BESTIMMUNG DER BATTERIELADESTRATEGIE EINER BATTERIEWECHSELSTATION

PROCÉDÉ ET APPAREIL POUR DÉTERMINER UNE STRATÉGIE DE CHARGE DE BATTERIE D'UNE STATION DE PERMUTATION DE BATTERIES

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **20.10.2017 CN 201710982778**

(43) Date of publication of application:
**26.08.2020 Bulletin 2020/35**

(73) Proprietor: **NIO (Anhui) Holding Co., Ltd.**
**Hefei City, Anhui Province (CN)**

(72) Inventor: **YE, Jian**
**Shanghai (CN)**

(74) Representative: **Vossius & Partner**
**Patentanwälte Rechtsanwälte mbB**
**Siebertstrasse 3**
**81675 München (DE)**

(56) References cited:
WO-A1-2016/147307    CN-A- 102 074 978
CN-A- 105 978 058    DE-A1- 102012 015 522
KR-A- 20150 054 464    US-A1- 2017 366 023
US-B2- 9 472 970

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a method for determining a battery charging strategy for a battery swapping station, a control device for implementing the method, a battery swapping station comprising the control device, and a computer storage medium for implementing the method.

**BACKGROUND ART**

Power batteries in pure electric vehicles are generally replenished with energy by two modes, namely, a charging mode and a battery swapping mode. The charging mode mainly has the disadvantage of poor user experience due to long charging time. The battery swapping mode, however, can solve a series of problems such as short cruising range, difficulty in charging batteries and high costs of electric vehicles. Thus, it is a mode with good technology and market prospects.
In the battery swapping mode, operators of battery swapping stations are responsible for unified management of power batteries, and users may apply to these operators for battery swapping service. To ensure that the battery swapping demand is met, the battery swapping stations often need to reserve abundant fully-charged batteries which mostly come from two sources: the original reserve and the recharged depleted battery. Considering various factors such as efficiency, cost and user experience, the number of fully-charged batteries available at any moment in battery swapping stations should strive to match the battery swapping demand. However, this is by no means easy given that users' total daily demand for swapping batteries often goes beyond the capability of battery swapping stations, not to mention that the ratio of setting up battery swapping stations cannot keep up with the increasing demand, which further exacerbates such imbalance. In addition, the depleted battery should be charged slowly to extend the service life of batteries, which makes it more difficult to match supply with demand.
DE 10 2012 015 522 A1 relates to a method for storing and providing battery units. The method includes providing a demand information which indicates the number of required battery units and their desired charge states for one or more provision time point. One or more battery units are selected, so that each of the selected battery unit is brought within a period up to the assigned provision time point from its current charge state to the desired charge state. A charging of each of the selected battery unit is initiated, so that they are charged to the desired provision time point to the desired charge state.

SUMMARY OF THE INVENTION

The invention for which protection is sought is defined by the independent claims. The dependent claims concern particular embodiments.
One objective of the present invention is to provide a method for determining a battery charging strategy for a battery swapping station, which has such advantages as improving user experience and increasing battery management efficiency for the battery swapping station.
The method for determining a battery charging strategy for a battery swapping station according to one aspect of the present invention comprises the steps of:

obtaining a number of currently serviceable batteries in the battery swapping station, a charging ratio of a charger, time required to complete vehicle battery replacement, and a remaining capacity of battery to be replaced; and

according to the number of currently serviceable batteries in the battery swapping station, the charging ratio of the charger, the time required to complete vehicle battery replacement, and the remaining capacity of the battery to be replaced, optimizing a target charging capacity of a depleted battery to be charged by the charger in such a way that the battery swapping station can provide an uninterrupted battery swapping service as much as possible.

Preferably, in the above method, the remaining capacity of the battery to be replaced and the target charging capacity of the depleted battery are represented by State of Charge (SOC).
According to the invention, in the above method, the remaining capacity of the battery to be replaced is a preset minimum allowable remaining capacity. According to a first aspect of the invention, the target charging capacity is optimized in the following manner:

$$SOC_{Target} = SOC_{User} + \frac{(N-1) \times t}{T} \times V$$

$$N \times t < T$$

wherein $SOC_{Target}$ and $SOC_{User}$ respectively represent the target charging capacity of the depleted battery and the remaining capacity of the battery to be replaced, N represents the number of currently serviceable batteries, t represents the time required to complete vehicle battery replacement, T represents a time interval for providing an uninterrupted battery swapping service, and V represents the charging ratio of the charger.

According to a second aspect of the invention, the target charging capacity is optimized in the following manner:

$$SOC_{Target} = SOC_{User} + \frac{(N-1) \times t}{T} \times V \times P$$

$$N \times t \times P < T$$

wherein $SOC_{Target}$ and $SOC_{User}$ respectively represent the target charging capacity of the depleted battery and the remaining capacity of the battery to be replaced, N represents the number of currently serviceable batteries, t represents the time required to complete vehicle battery replacement, T represents a time interval for providing an uninterrupted battery swapping service, V represents the charging ratio of a charger, and P represents a load factor of the battery swapping station.

Preferably, in the above method, the minimum allowable remaining capacity can be dynamically adjusted. More preferably, different time periods of each day have correspondingly different minimum allowable remaining capacity.

Another objective of the present invention is to provide a device for determining a battery charging strategy for a battery swapping station, which has such advantages as improving user experience and increasing battery management efficiency for the battery swapping station.

The device according to another aspect of the present invention is defined by the features of the respective independent claim, and particularly comprises

a first module for obtaining a number of currently serviceable batteries in a battery swapping station, a charging ratio of a charger, time required to complete vehicle battery replacement, and a remaining capacity of battery to be replaced; and

a second module for according to the number of currently serviceable batteries in the battery swapping station, the charging ratio of the charger, the time required to complete vehicle battery replacement, and the remaining capacity of the battery to be replaced, optimizing the target charging capacity of the depleted battery to be charged by the charger in such a way that the battery swapping station can provide an uninterrupted battery swapping service as much as possible.

Still another objective of the present invention is to provide a control device which has such advantages as improving user experience and increasing battery management efficiency for a battery swapping station.

The control device according to still another aspect of the present invention comprises a memory, a processor, and a computer program stored on the memory and executable on the processor, wherein the program is executed to implement the above method.

Yet another objective of the present invention is to provide a battery swapping station which have such advantages as improving user experience and increasing battery management efficiency.

The battery swapping stations according to yet another object of the present invention comprise:

a control device as stated above; and

a charger configured to charge a depleted battery according to an optimized target charging capacity.

The present invention further provides a computer-readable storage medium on which a computer program is stored, characterized in that the program, when executed by the processor, implements the above method.

In the present invention, with the introduction of the strategy that renders the target charging capacity adjustable, the battery swapping station can provide uninterrupted service, and at the same time have greatly improved capability for daily battery swapping. Moreover, the present invention also provides the following beneficial effects: making the slow charging strategy possible, thereby ensuring and extending the service life and performance of batteries; and more accurately predicting the bottleneck of battery swapping resources, thereby making the resource allocation more scientific and reasonable.

## BRIEF DESCRIPTION OF THE DRAWINGS

The above and/or other aspects and advantages of the present invention will be rendered clearer and easier to understand in conjugation of the description of various aspects of the drawings. The same or similar units in the drawings are indicated by the same reference signs. The drawings include:

FIG. 1 is a flowchart of a method for determining a battery charging strategy for a battery swapping station according to an embodiment of the present invention.

FIG. 2 is a schematic block diagram of a device for determining a battery charging strategy for a battery swapping station according to another embodiment of the present invention.

FIG. 3 is a schematic block diagram of a control device according to still another embodiment of the present invention.

FIG. 4 is a schematic block diagram of a battery swapping station according to yet another embodiment of the present invention.

## DETAILED DESCRIPTION OF THE INVENTION

The present invention will be explained in more details with reference to the drawings illustrating the embodiments of the present invention. However, the present invention may be implemented in different forms, and should not be interpreted as being limited to the embodiments provided herein. These embodiments intend to comprehensively disclose the present invention so that the protection scope of the present invention can be fully conveyed to persons skilled in the art.

In this specification, the terms "comprise" and "include" mean that in addition to the units and steps that are directly and explicitly described in the specification and claims, the technical solutions of the present invention do not exclude other units and steps that have not been directly or explicitly described.

The terms such as "first" and "second" do not indicate the order of units in terms of time, space, size, etc., but are only used to distinguish the units.

The term "coupled" should be understood to cover the circumstances where electrical energy or signals are directly transmitted between two units, or where electrical energy or signals are transmitted indirectly via one or more third units.

The term "serviceable batteries" should be understood as batteries with higher state of charge (for example, a state of charge greater than or equal to 50%) that can be used to replace users' depleted battery in a battery swapping station. They include batteries with a relatively high state of charge that are originally reserved in the battery swapping station, and batteries with a relatively high state of charge obtained by recharging users' depleted battery.

According to one aspect of the present invention, by optimizing the target charging capacity of users' depleted battery to be charged by a charger, the battery swapping station can provide an uninterrupted battery swapping service as much as possible, and in case of limited resources, strike a balance between maximizing resource availability and meeting battery swapping demand. During the process of optimizing the target charging capacity, the number of currently serviceable batteries, the charging ratio of a charger, the time required to complete vehicle battery replacement, and the remaining capacity of a battery to be replaced are factors that need to be taken into consideration. Normally, the remaining capacity of the battery to be replaced and the target charging capacity of the depleted battery are represented by the state of charge (SOC).

The remaining capacity of the battery to be replaced is a preset minimum allowable remaining capacity. In other words, the battery swapping station only allow a depleted battery having its remaining battery capacity greater than or equal to the minimum allowable remaining capacity to be replaced with serviceable batteries. More preferably, the minimum allowable remaining capacity can be dynamically adjusted. For example, different time periods of each day have correspondingly different minimum allowable remaining capacity.

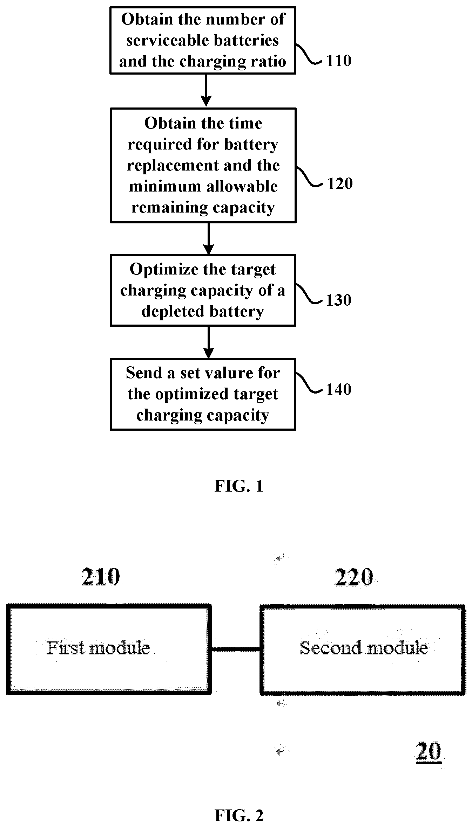

FIG. 1 is a flowchart of a method for determining a battery charging strategy for a battery swapping station according to an embodiment of the present invention.

As illustrated in FIG. 1, in step 110, a control device such as a management system for a battery swapping station obtains the number of currently serviceable batteries and the charging ratio of a charger in the battery swapping station. In this embodiment, the charging ratio corresponds to the charging current or rate. For example, the charging ratio corresponding to a current value or charging rate of 1C indicates that it can charge a battery from 0% to 100% in terms of electric quantity within a unit time interval, e.g., 1 hour; 0.5C is half of 1C, which indicates that it will take 2 hours to charge a battery from 0% to 100% in terms of electric quantity; 1.5 C is 1.5 times of 1C, which indicates that it will takes 40 minutes to charge a battery from 0% to 100% in terms of electric quantity.

Next, in step 120, the control device obtains parameters such as the time required to complete vehicle battery replacement and the minimum allowable remaining capacity. These parameters may be stored in a memory outside the control device, or may be stored in a memory within the control device.

As mentioned above, the minimum allowable remaining capacity may have different corresponding values at different time periods in a day. For example, during peak periods (such as in the daytime) when battery swapping demand is high, the minimum allowable remaining capacity can be set at a lower level, while during valley periods (such as late at night) when battery swapping demand is low, the minimum allowable remaining capacity can be set at a higher level. This, on the one hand, can avoid the service bottleneck caused by too many vehicles entering the a battery swapping station to swap batteries and on the other hand, can improve the utilization of the charger.

Next, in step 130, the control device optimizes the target charging capacity of a depleted battery to be charged by a charger in the battery swapping station, so that the battery swapping station can provide an uninterrupted battery swapping service as much as possible. The control device optimizes the target charging capacity in the following manner:

$$SOC_{Target} = SOC_{User} + \frac{(N-1) \times t}{T} \times V \quad (1)$$

$$N \times t < T \quad (2)$$

wherein $SOC_{Target}$ and $SOC_{User}$ respectively represent the target charging capacity of a depleted battery and the remaining capacity of a battery to be replaced, N represents the number of currently serviceable batteries, t represents the time required to complete vehicle battery replacement, T represents the time interval for providing an uninterrupted battery swapping service, and V represents the charging ratio of the charger.

In the above means of optimization, assuming that the time required to complete vehicle battery replacement t = 10 minutes, and the number of currently serviceable batteries in a battery swapping station N = 5, then (N-1)×t actually represents the time required to charge batteries to ensure an uninterrupted battery swapping service. Moreover, assuming that the charging ratio V corresponds to 0.5C and $SOC_{User}$ is 20%, then it can be determined according to the above formula (1) that the target charging threshold or $SOC_{Target}$ is 53% when the time interval for providing an uninterrupted battery swapping service is set as one hour.

Based on the assumption of the above parameters, it can be guaranteed that there are always 6 batteries with the SOC greater than or equal to 53% for an uninterrupted battery swapping service per hour or for the time interval for providing an uninterrupted battery swapping service of one hour in a battery swapping station. As for a scale of 50 battery swapping stations, 6*24*50 = 7200 times of battery swapping service can be provided each day.

Next, in step 140, the control device sends a set value of the optimized target charging capacity to the charger.

Under normal circumstances, the battery swapping demand of a battery swapping station changes with time within a day, and there are peak and valley periods. In order to finely manage the battery charging process, a load factor of a battery swapping station is introduced into the above formula (1) so that the target charging capacity is optimized in consideration of the factor that the demand changes with time. Specifically, in step 130, the control device alternatively optimizes the target charging capacity in the following manner:

$$SOC_{Target} = SOC_{User} + \frac{(N-1) \times t}{T} \times V \times P \quad (3)$$

$$N \times t \times P < T \quad (4)$$

wherein $SOC_{Target}$ and $SOC_{User}$ respectively represent the target charging capacity of a depleted battery and the remaining capacity of a battery to be replaced, N represents the number of currently serviceable batteries, t represents the time required to complete vehicle battery replacement, T represents the time interval for providing an uninterrupted battery swapping service, V represents the charging ratio of a charger, and P represents a load factor of a battery swapping station.

The load factor P of the battery swapping station herein may be, for example, a parameter value in the range of 0-100%. For instance, it may be 100% for the peak periods of battery swapping, and 50% for the valley periods of battery swapping.

The method as illustrated in FIG. 1 may be periodically or randomly implemented to dynamically adjust the set value of the target charging capacity.

FIG. 2 is a schematic block diagram of an apparatus for determining a battery charging strategy for a battery swapping station according to another embodiment of the present invention.

The device 20 for determining the battery charging strategy for a battery swapping station as illustrated in FIG. 2 comprises a first module 210 and a second module 220. In this embodiment, the first module 210 is used for obtaining a number of currently serviceable batteries in a battery swapping station, a charging ratio of a charger, time required to complete vehicle battery replacement, and a remaining capacity of a battery to be replaced. The second module 220 is used for according to the number of currently serviceable batteries in the battery swapping station, the charging ratio of the charger, the time required to complete vehicle battery replacement, and the remaining capacity of the battery to be replaced, optimizing a target charging capacity of a depleted battery to be charged by the charger in such a way that the battery swapping station can provide an uninterrupted battery swapping service as much as possible.

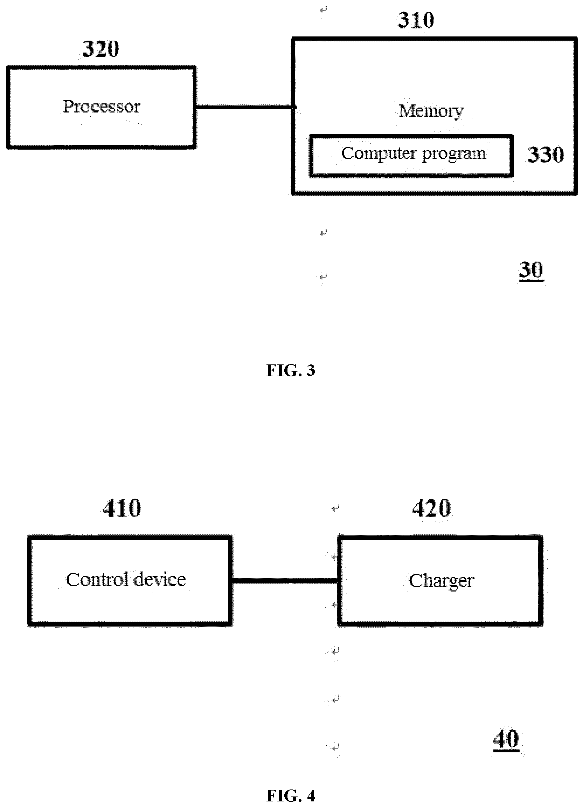

FIG. 3 is a schematic block diagram of a control device according to still another embodiment of the present invention.

The control device 30 as illustrated in FIG. 3 includes a memory 310, a processor 320, and a computer program 330 stored on the memory 310 and executable on the processor 320, wherein the computer program 330 can be executed to implement the method for determining a battery charging strategy for a battery swapping station in view of FIG. 1.

FIG. 4 is a schematic block diagram of a battery swapping station according to yet another embodiment of the present invention.

As illustrated in FIG. 4, the battery swapping station 40 includes a control device 410 and a charger 420. In this embodiment, the control device 410 is implemented by the control device in FIG. 3, and the charger 420 is configured to charge a depleted battery according to the optimized target charging capacity determined by the control device 410.

According to yet another aspect of the present invention, there is further provided a computer-readable storage medium on which a computer program is stored. The program, when executed by the processor, can implement the method for determining a battery charging strategy for battery swapping stations in view of FIG. 1.

The embodiments and examples set forth in this text are provided to best illustrate the embodiments of this technology and specific application thereof, so that persons skilled in the art can carry out and utilize the present invention. However, it would be understood by persons skilled in the art that the above description and examples are for the convenience of illustration and giving examples only. The description is not intended to cover all aspects of the present invention or to limit the present invention to the precise form disclosed herein.

In view of the foregoing, the scope of the present disclosure shall be determined by the following claims.

## Claims

1. A method for determining a battery charging strategy for a battery swapping station, comprising the steps of:

   obtaining (110,120) a number of currently serviceable batteries in the battery swapping station, a charging ratio of a charger, time required to complete vehicle battery replacement, and a remaining capacity of a battery to be replaced; and
   optimizing (130) a target charging capacity of a depleted battery to be charged by the charger, according to the number of currently serviceable batteries in the battery swapping station, the charging ratio of the charger, the time required to complete vehicle battery replacement, and the remaining capacity of the battery to be replaced, wherein the target charging capacity is optimized in the following manner:

   $$SOC_{Target} = SOC_{User} + \frac{(N-1) \times t}{T} \times V$$

   $$N \times t < T$$

   wherein $SOC_{Target}$ and $SOC_{User}$ respectively represent the target charging capacity of the depleted battery and the remaining capacity of the battery to be replaced, N represents the number of currently serviceable batteries, t represents the time required to complete vehicle battery replacement, T represents a time interval for providing an uninterrupted battery swapping service, and V represents the charging ratio of the charger, wherein the remaining capacity of the battery to be replaced is a preset minimum allowable remaining capacity.

2. A method for determining a battery charging strategy for a battery swapping station, comprising the steps of:

   obtaining (110,120) a number of currently serviceable batteries in the battery swapping station, a charging ratio of a charger, time required to complete vehicle battery replacement, and a remaining capacity of a battery to be replaced; and

optimizing (130) a target charging capacity of a depleted battery to be charged by the charger, according to the number of currently serviceable batteries in the battery swapping station, the charging ratio of the charger, the time required to complete vehicle battery replacement, and the remaining capacity of the battery to be replaced, wherein the target charging capacity is optimized in the following manner:

$$SOC_{Target} = SOC_{User} + \frac{(N-1) \times t}{T} \times V \times P$$

$$N \times t \times P < T$$

wherein $SOC_{Target}$ and $SOC_{User}$ respectively represent the target charging capacity of the depleted battery and the remaining capacity of the battery to be replaced, N represents the number of currently serviceable batteries, t represents the time required to complete vehicle battery replacement, T represents a time interval for providing an uninterrupted battery swapping service, V represents the charging ratio of the charger, and P represents a load factor of the battery swapping station,
wherein the remaining capacity of the battery to be replaced is a preset minimum allowable remaining capacity.

3. The method according to claim 1 or 2, wherein the remaining capacity of the battery to be replaced and the target charging capacity of the depleted battery are represented by State of Charge (SOC).

4. The method according to claim 1 or 2, wherein the minimum allowable remaining capacity is dynamically adjusted.

5. The method according to claim 4, wherein different time periods of each day have correspondingly different minimum allowable remaining capacity.

6. A device for determining a battery charging strategy for a battery swapping station, comprising:

a first module (210) for obtaining a number of currently serviceable batteries in the battery swapping stations, a charging ratio of a charger, time required to complete vehicle battery replacement, and the remaining capacity of battery to be replaced; and
a second module (220) for according to the number of currently serviceable batteries in the battery swapping station, the charging ratio of the charger, the time required to complete vehicle battery replacement, and the remaining capacity of battery to be replaced, optimizing target charging capacity of depleted battery to be charged by the charger in such a manner that the battery swapping station can provide an uninterrupted battery swapping service as much as possible,
wherein the device is configured such that the target charging capacity is optimized in the following manner:

$$SOC_{Target} = SOC_{User} + \frac{(N-1) \times t}{T} \times V$$

$$N \times t < T$$

wherein $SOC_{Target}$ and $SOC_{User}$ respectively represent the target charging capacity of the depleted battery and the remaining capacity of the battery to be replaced, N represents the number of currently serviceable batteries, t represents the time required to complete vehicle battery replacement, T represents a time interval for providing an uninterrupted battery swapping service, and V represents the charging ratio of the charger,
wherein the remaining capacity of the battery to be replaced is a preset minimum allowable remaining capacity.

7. A device for determining a battery charging strategy for a battery swapping station, comprising:

a first module (210) for obtaining a number of currently serviceable batteries in the battery swapping stations, a charging ratio of a charger, time required to complete vehicle battery replacement, and the remaining capacity of battery to be replaced; and
a second module (220) for according to the number of currently serviceable batteries in the battery swapping station, the charging ratio of the charger, the time required to complete vehicle battery replacement, and the remaining capacity of battery to be replaced, optimizing target charging capacity of depleted battery to be charged by the charger in such a manner that the battery swapping station can provide an uninterrupted battery swapping service as much as possible,

wherein the device is configured such that the target charging capacity is optimized in the following manner:

$$SOC_{Target} = SOC_{User} + \frac{(N-1) \times t}{T} \times V \times P$$

$$N \times t \times P < T$$

wherein $SOC_{Target}$ and $SOC_{User}$ respectively represent the target charging capacity of the depleted battery and the remaining capacity of the battery to be replaced, N represents the number of currently serviceable batteries, t represents the time required to complete vehicle battery replacement, T represents a time interval for providing an uninterrupted battery swapping service, V represents the charging ratio of the charger, and P represents a load factor of the battery swapping station,

wherein the remaining capacity of the battery to be replaced is a preset minimum allowable remaining capacity.

8. A control device (30) comprising a memory (310), a processor (320), and a computer program (330) stored on the memory (310) and executable on the processor (320), **characterized in that** the program, when executed on the processor, causes the processor to implement the method according to any one of claims 1-5.

9. A battery swapping station (40), comprising:

   a control device (410) according to claim 8; and
   a charger (420) configured to charge depleted battery according to the optimized target charging capacity.

10. A computer-readable storage medium on which a computer program is stored, **characterized in that** the program, when executed by a processor, causes the processor to implement the method according to any one of claims 1-5.

**Patentansprüche**

1. Verfahren zum Bestimmen einer Batterieladestrategie für eine Batteriewechselstation, umfassend die folgenden Schritte:

   Erhalten (110, 120) einer Anzahl von aktuell betriebsfähigen Batterien in der Batteriewechselstation, eines Ladeverhältnisses eines Ladegeräts, einer zum Durchführen eines Fahrzeugbatterieaustauschs erforderlichen Zeit und einer verbleibenden Kapazität einer auszutauschenden Batterie; und
   Optimieren (130) einer Zielladekapazität einer durch das Ladegerät zu ladenden entladenen Batterie gemäß der Anzahl von aktuell betriebsfähigen Batterien in der Batteriewechselstation, dem Ladeverhältnis des Ladegeräts, der zum Durchführen des Fahrzeugbatterieaustauschs erforderlichen Zeit und der verbleibenden Kapazität der auszutauschenden Batterie,
   wobei die Zielladekapazität auf folgende Weise optimiert wird:

$$SOC_{Target} = SOC_{User} + \frac{(N-1) \times t}{T} \times V$$

$$N \times t < T$$

wobei $SOC_{Target}$ und $SOC_{User}$ die Zielladekapazität der entladenen Batterie bzw. die verbleibende Kapazität der auszutauschenden Batterie darstellen, N die Anzahl von aktuell betriebsfähigen Batterien darstellt, t die zum Durchführen des Fahrzeugbatterieaustauschs erforderliche Zeit darstellt, T ein Zeitintervall zum Bereitstellen eines unterbrechungsfreien Batteriewechseldienstes darstellt und V das Ladeverhältnis des Ladegeräts darstellt,
wobei die verbleibende Kapazität der auszutauschenden Batterie eine voreingestellte zulässige verbleibende Mindestkapazität ist.

2. Verfahren zum Bestimmen einer Batterieladestrategie für eine Batteriewechselstation, umfassend die folgenden Schritte:

Erhalten (110, 120) einer Anzahl von aktuell betriebsfähigen Batterien in der Batteriewechselstation, eines Ladeverhältnisses eines Ladegeräts, einer zum Durchführen eines Fahrzeugbatterieaustauschs erforderlichen Zeit und einer verbleibenden Kapazität einer auszutauschenden Batterie; und
Optimieren (130) einer Zielladekapazität einer durch das Ladegerät zu ladenden entladenen Batterie gemäß der Anzahl von aktuell betriebsfähigen Batterien in der Batteriewechselstation, dem Ladeverhältnis des Ladegeräts, der zum Durchführen des Fahrzeugbatterieaustauschs erforderlichen Zeit und der verbleibenden Kapazität der auszutauschenden Batterie,
wobei die Zielladekapazität auf folgende Weise optimiert wird:

$$SOC_{Target} = SOC_{User} + \frac{(N-1) \times t}{T} \times V \times P$$

$$N \times t \times P < T$$

wobei $SOC_{Target}$ und $SOC_{User}$ die Zielladekapazität der entladenen Batterie bzw. die verbleibende Kapazität der auszutauschenden Batterie darstellen, N die Anzahl von aktuell betriebsfähigen Batterien darstellt, t die zum Durchführen des Fahrzeugbatterieaustauschs erforderliche Zeit darstellt, T ein Zeitintervall zum Bereitstellen eines unterbrechungsfreien Batteriewechseldienstes darstellt, V das Ladeverhältnis des Ladegeräts darstellt und P einen Lastfaktor der Batteriewechselstation darstellt,
wobei die verbleibende Kapazität der auszutauschenden Batterie eine voreingestellte zulässige verbleibende Mindestkapazität ist.

3. Verfahren nach Anspruch 1 oder 2, wobei die verbleibende Kapazität der auszutauschenden Batterie und die Zielladekapazität der entladenen Batterie durch einen Ladezustand (SOC, State of Charge) dargestellt werden.

4. Verfahren nach Anspruch 1 oder 2, wobei die zulässige verbleibende Mindestkapazität dynamisch angepasst wird.

5. Verfahren nach Anspruch 4, wobei unterschiedliche Zeiträume jedes Tages eine entsprechend unterschiedliche zulässige verbleibende Mindestkapazität aufweisen.

6. Vorrichtung zum Bestimmen einer Batterieladestrategie für eine Batteriewechselstation, umfassend:

ein erstes Modul (210) zum Erhalten einer Anzahl von aktuell betriebsfähigen Batterien in den Batteriewechselstationen, eines Ladeverhältnisses eines Ladegeräts, einer zum Durchführen eines Fahrzeugbatterieaustauschs erforderlichen Zeit und der verbleibenden Kapazität einer auszutauschenden Batterie; und
ein zweites Modul (220) zum Optimieren, gemäß der Anzahl von aktuell betriebsfähigen Batterien in der Batteriewechselstation, dem Ladeverhältnis des Ladegeräts, der zum Durchführen des Fahrzeugbatterieaustauschs erforderlichen Zeit und der verbleibenden Kapazität der auszutauschenden Batterie,
einer Zielladekapazität einer durch das Ladegerät zu ladenden entladenen Batterie derart, dass die Batteriewechselstation so weit wie möglich einen unterbrechungsfreien Batteriewechseldienst bereitstellen kann,
wobei die Vorrichtung derart ausgelegt ist, dass die Zielladekapazität auf folgende Weise optimiert wird:

$$SOC_{Target} = SOC_{User} + \frac{(N-1) \times t}{T} \times V$$

$$N \times t < T$$

wobei $SOC_{Target}$ und $SOC_{User}$ die Zielladekapazität der entladenen Batterie bzw. die verbleibende Kapazität der auszutauschenden Batterie darstellen, N die Anzahl von aktuell betriebsfähigen Batterien darstellt, t die zum Durchführen des Fahrzeugbatterieaustauschs erforderliche Zeit darstellt, T ein Zeitintervall zum Bereitstellen eines unterbrechungsfreien Batteriewechseldienstes darstellt und V das Ladeverhältnis des Ladegeräts darstellt,
wobei die verbleibende Kapazität der auszutauschenden Batterie eine voreingestellte zulässige verbleibende Mindestkapazität ist.

**7.** Vorrichtung zum Bestimmen einer Batterieladestrategie für eine Batteriewechselstation, umfassend:

ein erstes Modul (210) zum Erhalten einer Anzahl von aktuell betriebsfähigen Batterien in den Batteriewechselstationen, eines Ladeverhältnisses eines Ladegeräts, einer zum Durchführen eines Fahrzeugbatterieaustauschs erforderlichen Zeit und der verbleibenden Kapazität einer auszutauschenden Batterie; und
ein zweites Modul (220) zum Optimieren, gemäß der Anzahl von aktuell betriebsfähigen Batterien in der Batteriewechselstation, dem Ladeverhältnis des Ladegeräts, der zum Durchführen des Fahrzeugbatterieaustauschs erforderlichen Zeit und der verbleibenden Kapazität der auszutauschenden Batterie,
einer Zielladekapazität einer durch das Ladegerät zu ladenden entladenen Batterie derart, dass die Batteriewechselstation so weit wie möglich einen unterbrechungsfreien Batteriewechseldienst bereitstellen kann,
wobei die Vorrichtung derart ausgelegt ist, dass die Zielladekapazität auf folgende Weise optimiert wird:

$$SOC_{Target} = SOC_{User} + \frac{(N-1) \times t}{T} \times V \times P$$

$$N \times t \times P < T$$

wobei $SOC_{Target}$ und $SOC_{User}$ die Zielladekapazität der entladenen Batterie bzw. die verbleibende Kapazität der auszutauschenden Batterie darstellen, N die Anzahl von aktuell betriebsfähigen Batterien darstellt, t die zum Durchführen des Fahrzeugbatterieaustauschs erforderliche Zeit darstellt, T ein Zeitintervall zum Bereitstellen eines unterbrechungsfreien Batteriewechseldienstes darstellt, V das Ladeverhältnis des Ladegeräts darstellt und P einen Lastfaktor der Batteriewechselstation darstellt,
wobei die verbleibende Kapazität der auszutauschenden Batterie eine voreingestellte zulässige verbleibende Mindestkapazität ist.

**8.** Steuervorrichtung (30), die einen Speicher (310), einen Prozessor (320) und ein Computerprogramm (330) umfasst, das auf dem Speicher (310) gespeichert und auf dem Prozessor (320) ausführbar ist, **dadurch gekennzeichnet, dass** das Programm bei Ausführung auf dem Prozessor den Prozessor dazu veranlasst, das Verfahren nach einem der Ansprüche 1-5 zu implementieren.

**9.** Batteriewechselstation (40), umfassend:

eine Steuervorrichtung (410) nach Anspruch 8; und
ein Ladegerät (420), das dazu ausgelegt ist, eine entladene Batterie gemäß der optimierten Zielladekapazität zu laden.

**10.** Computerlesbares Speichermedium, auf dem ein Computerprogramm gespeichert ist, **dadurch gekennzeichnet, dass** das Programm bei Ausführung durch einen Prozessor den Prozessor dazu veranlasst, das Verfahren nach einem der Ansprüche 1-5 zu implementieren.

**Revendications**

**1.** Procédé pour déterminer une stratégie de recharge de batteries pour une station d'échange de batteries, comprenant les étapes suivantes :

l'obtention (110, 120) d'un nombre de batteries actuellement en bon état de service dans la station d'échange de batteries, d'un rapport de recharge d'un chargeur, d'un temps nécessaire pour achever un remplacement de batterie de véhicule, et d'une capacité restante d'une batterie destinée à être remplacée ; et
l'optimisation (130) d'une capacité de recharge cible d'une batterie épuisée destinée à être rechargée par le chargeur, selon le nombre de batteries actuellement en bon état de service dans la station d'échange de batteries, le rapport de recharge du chargeur, le temps nécessaire pour achever un remplacement de batterie de véhicule, et la capacité restante de la batterie destinée à être remplacée,
dans lequel la capacité de recharge cible est optimisée de la manière suivante :

$$SOC_{Cible} = SOC_{Utilisateur} + \frac{(N-1) \times t}{T} \times V$$

$$N \times t < T$$

dans lequel $SOC_{Cible}$ et $SOC_{Utilisateur}$ représentent respectivement la capacité de recharge cible de la batterie épuisée et la capacité restante de la batterie destinée à être remplacée, N représente le nombre de batteries actuellement en bon état de service, t représente le temps nécessaire pour achever un remplacement de batterie de véhicule, T représente un intervalle de temps pour fournir un service ininterrompu d'échange de batteries, et V représente le rapport de recharge du chargeur,
dans lequel la capacité restante de la batterie destinée à être remplacée est une capacité restante admissible minimum prédéfinie.

2. Procédé pour déterminer une stratégie de recharge de batteries pour une station d'échange de batteries, comprenant les étapes suivantes :

l'obtention (110, 120) d'un nombre de batteries actuellement en bon état de service dans la station d'échange de batteries, d'un rapport de recharge d'un chargeur, d'un temps nécessaire pour achever un remplacement de batterie de véhicule, et d'une capacité restante d'une batterie destinée à être remplacée ; et
l'optimisation (130) d'une capacité de recharge cible d'une batterie épuisée destinée à être rechargée par le chargeur, selon le nombre de batteries actuellement en bon état de service dans la station d'échange de batteries, le rapport de recharge du chargeur, le temps nécessaire pour achever un remplacement de batterie de véhicule, et la capacité restante de la batterie destinée à être remplacée,
dans lequel la capacité de recharge cible est optimisée de la manière suivante :

$$SOC_{Cible} = SOC_{Utilisateur} + \frac{(N-1) \times t}{T} \times V \times P$$

$$N \times t \times P < T$$

dans lequel $SOC_{Cible}$ et $SOC_{Utilisateur}$ représentent respectivement la capacité de recharge cible de la batterie épuisée et la capacité restante de la batterie destinée à être remplacée, N représente le nombre de batteries actuellement en bon état de service, t représente le temps nécessaire pour achever un remplacement de batterie de véhicule, T représente un intervalle de temps pour fournir un service ininterrompu d'échange de batteries, V représente le rapport de recharge du chargeur, et P représente un facteur de charge de la station d'échange de batteries,
dans lequel la capacité restante de la batterie destinée à être remplacée est une capacité restante admissible minimum prédéfinie.

3. Procédé selon la revendication 1 ou 2, dans lequel la capacité restante de la batterie destinée à être remplacée et la capacité de recharge cible de la batterie épuisée sont représentées par un état de charge (State Of Charge, SOC).

4. Procédé selon la revendication 1 ou 2, dans lequel la capacité restante admissible minimum est réglée dynamiquement.

5. Procédé selon la revendication 4, dans lequel différentes périodes de chaque jour ont de façon correspondante une capacité restante admissible minimum différente.

6. Dispositif pour déterminer une stratégie de recharge de batteries pour une station d'échange de batteries, comprenant :

un premier module (210) pour obtenir un nombre de batteries actuellement en bon état de service dans les stations d'échange de batteries, un rapport de recharge d'un chargeur, un temps nécessaire pour achever un remplacement de batterie de véhicule, et la capacité restante de batterie destinée à être remplacée ; et
un second module (220) pour, selon le nombre de batteries actuellement en bon état de service dans la station d'échange de batteries, le rapport de recharge du chargeur, le temps nécessaire pour achever un remplacement de batterie de véhicule, et la capacité restante de batterie destinée à être remplacée, optimiser une capacité de recharge cible de batterie épuisée destinée à être rechargée par le chargeur d'une manière telle que la station d'échange de batteries puisse fournir un service ininterrompu d'échange de batteries autant que possible, dans lequel le dispositif est configuré de manière telle que la capacité de recharge cible est optimisée de la manière suivante

$$SOC_{Cible} = SOC_{Utilisateur} + \frac{(N-1) \times t}{T} \times V$$

$$N \times t < T$$

dans lequel $SOC_{Cible}$ et $SOC_{Utilisateur}$ représentent respectivement la capacité de recharge cible de la batterie épuisée et la capacité restante de la batterie destinée à être remplacée, N représente le nombre de batteries actuellement en bon état de service, t représente le temps nécessaire pour achever un remplacement de batterie de véhicule, T représente un intervalle de temps pour fournir un service ininterrompu d'échange de batteries, et V représente le rapport de recharge du chargeur, dans lequel la capacité restante de la batterie destinée à être remplacée est une capacité restante admissible minimum prédéfinie.

7. Dispositif pour déterminer une stratégie de recharge de batteries pour une station d'échange de batteries, comprenant :

un premier module (210) pour obtenir un nombre de batteries actuellement en bon état de service dans les stations d'échange de batteries, un rapport de recharge d'un chargeur, un temps nécessaire pour achever un remplacement de batterie de véhicule, et la capacité restante de batterie destinée à être remplacée ; et un second module (220) pour, selon le nombre de batteries actuellement en bon état de service dans la station d'échange de batteries, le rapport de recharge du chargeur, le temps nécessaire pour achever un remplacement de batterie de véhicule, et la capacité restante de batterie destinée à être remplacée, optimiser une capacité de recharge cible de batterie épuisée destinée à être rechargée par le chargeur d'une manière telle que la station d'échange de batteries puisse fournir un service ininterrompu d'échange de batteries autant que possible, dans lequel le dispositif est configuré de manière telle que la capacité de recharge cible est optimisée de la manière suivante

$$SOC_{Cible} = SOC_{Utilisateur} + \frac{(N-1) \times t}{T} \times V \times P$$

$$N \times t \times P < T$$

dans lequel $SOC_{Cible}$ et $SOC_{Utilisateur}$ représentent respectivement la capacité de recharge cible de la batterie épuisée et la capacité restante de la batterie destinée à être remplacée, N représente le nombre de batteries actuellement en bon état de service, t représente le temps nécessaire pour achever un remplacement de batterie de véhicule, T représente un intervalle de temps pour fournir un service ininterrompu d'échange de batteries, V représente le rapport de recharge du chargeur, et P représente un facteur de charge de la station d'échange de batteries, dans lequel la capacité restante de la batterie destinée à être remplacée est une capacité restante admissible minimum prédéfinie.

8. Dispositif de commande (30) comprenant une mémoire (310), un processeur (320), et un programme d'ordinateur (330) stocké sur la mémoire (310) et exécutable sur le processeur (320), **caractérisé en ce que** le programme, lorsqu'il est exécuté sur le processeur, amène le processeur à mettre en œuvre le procédé selon l'une quelconque des revendications 1 à 5.

9. Station d'échange de batteries (40), comprenant :

un dispositif de commande (410) selon la revendication 8 ; et un chargeur (420) configuré pour recharger une batterie épuisée selon la capacité de recharge cible optimisée.

**10.** Support de stockage lisible par ordinateur sur lequel est stocké un programme d'ordinateur, **caractérisé en ce que** le programme, lorsqu'il est exécuté par un processeur, amène le processeur à mettre en œuvre le procédé selon l'une quelconque des revendications 1 à 5.

Obtain the number of
serviceable batteries
and the charging ratio — 110

Obtain the time
required for battery
replacement and the
minimum allowable
remaining capacity — 120

Optimize the target
charging capacity of a
depleted battery — 130

Send a set valure for
the optimized target
charging capacity — 140

FIG. 1

210                          220

First module        Second module

20

FIG. 2

**320**

Processor

**310**

Memory

Computer program **330**

**30**

**FIG. 3**

**410**

Control device

**420**

Charger

**40**

**FIG. 4**

**EP 3 700 044 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102012015522 A1